# EUROPEAN PATENT SPECIFICATION

(11) **EP 3 051 894 B1**
(45) Date of publication and mention of the grant of the patent: **11.10.2017**
(21) Application number: 15305137.0
(22) Date of filing: 30.01.2015
(51) Int. Cl.: H04W 68/02

(54) **Reducing signalling overhead for machine type communications (MTC)**
VERRINGERUNG EINES SIGNALISIERUNGSAUFWANDS FÜR MASCHINENTYPKOMMUNIKATIONEN (MTC)
RÉDUCTION DE SURDÉBIT DE SIGNALISATION POUR DES COMMUNICATIONS DE TYPE MACHINE (MTC)

(43) Date of publication of application: 03.08.2016
(73) Proprietor: ALCATEL LUCENT, 92100 Boulogne-Billancourt (FR)
(72) Inventor: LIM, Seau Sian, Swindon, Wiltshire SN5 7DJ (GB); WONG, Shin Horng, Swindon, Wiltshire SN5 7DJ (GB)
(74) Representative: Berthier, Karine

(56) References cited:
- WO-A1-2014/161631
- WO-A1-2015/012654
- RAN1: "LS on Paging for MTC", 3GPP DRAFT; R1-145454, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 21 November 2014 (2014-11-21), XP050900489, Retrieved from the Internet: URL:http://www.3gpp.org/ftp/Meetings_3GPP_ SYNC/RAN1/Docs/ [retrieved on 2014-11-21]
- INTERDIGITAL: "RAR and Paging for Rel-13 LC-MTC", 3GPP DRAFT; R1-144206_LC-MTC COMMON CONTROL CHANNEL_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875483, Retrieved from the Internet: URL:http://www.3gpp.org/ftp/Meetings_3GPP_ SYNC/RAN1/Docs/ [retrieved on 2014-10-05]

## Description

### TECHNICAL FIELD

Aspects relate, in general, to a method for reducing signalling overhead, and to a node.

### BACKGROUND

A Machine Type Communication (MTC) device is user equipment (UE) in a wireless telecommunication network that is used by a machine for specific application. MTC are a class of low cost/low complexity (LC) UEs.

An example of such MTC device is smart meter. Typically, LC-UEs such as MTC UEs are located in areas of high attenuation, such as in basements for example, which suffer from high penetration loss. Accordingly, it is difficult for the UE to communicate with the network and vice versa. This is compounded by the increasing desire to reduce the cost of complexity of such UEs by, for example, reduce the number of UE antennae, limiting transport block size (TBS) in the downlink and uplink for unicast to 1000 bits and so on.

WO2014/16163 describes a method and system for controlling retransmissions in order to extend coverage in a telecommunications network.

RANI: "Ls On Paging For Mtc", 3gpp Draft; RI-145454, 3rd Generation Partnership Project (3GPP), Mobile Competence Centre; 650, Route Des Lucioles ; F-06921 Sophia-Antipolis Cedex; France, Vol RAN WGI, No. San Francisco, USA; 20141117/20141121, 21 November 2014 (2014-11-21) discusses paging and operating coverage enhancements for low complexity UEs.

### SUMMARY

According to an example, there is provided a method as provided in claim 1. For example, the message can include an indication of a configured or selected repetition level to be used or expected by the LC-UE. For example, an indication or representation of a repetition level to be used by the LC-UE can be communicated to the LC-UE from a network node. Any future paging message can be transmitted to the LC-UE at the configured repetition level. The indication can be provided in an LC-UE network access stratum (NAS) message or a resource control (RRC) message. The repetition level can be determined by the network , for example based on the quality of the uplink signal such as preamble or measurement reports from the UE.

The LC-UE can be prohibited or otherwise constrained from reporting a change in repetition level for a predefined period of time. The LC-UE can be prohibited from reporting an improvement in the repetition level. For example, reporting a reduction in repetition level can be prohibited. The LC-UE can be prohibited from reporting a repetition level on the basis of a threshold of the LC-UE radio condition or a change of radio condition, for example the LC-UE only reports its repetition level if the radio condition improves by more than 3 dB from the last reporting. The LC-UE can be prohibited from reporting a repetition level in the event that the signal-to-noise ratio or a change in the signal-to-noise ratio for the LC-UE is below a predetermined threshold value.

According to an example, there is provided a node, in a wireless telecommunication network, the node operable to transmit data representing an indication containing or otherwise providing coverage enhanced mode and/or a repetition level for idle mode paging for a low cost/complexity (LC) user equipment (UE), and transmit a message to the LC UE representing an instruction prohibiting the LC-UE from reporting a repetition level and provide a configured or selected repetition level for the LC-UE. The node can transmit any future paging message to the LC-UE at the configured repetition level. The message representing an instruction can be transmitted to the LC-UE in response to an indication from a mobility management entity of the network relating to the frequency of repetition level updates provided by the LC-UE. The node can determine whether the LC-UE should enter a coverage or no coverage enhanced mode. The node can determine a required repetition level for the LC-UE. The node can make a determination when the LC-UE enters a connected mode of operation with the node. The node can determine whether the LC-UE should enter a coverage or no coverage enhanced mode via initial establishment with the LC-UE using a preamble or repetition level used for random access response with the LC-UE.

### BRIEF DESCRIPTION OF THE DRAWINGS

Embodiments will now be described, by way of example only, with reference to the accompanying drawings, in which:
Figure 1 is a schematic representation of a portion of a wireless telecommunication network according to an example;
Figure 2 is schematic representation of signaling for a NAS signaling approach according to an example;
Figure 3 is schematic representation of signaling for an RRC signaling approach according to an example; and
Figure 4 is schematic representation of signaling for an RRC signaling approach according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

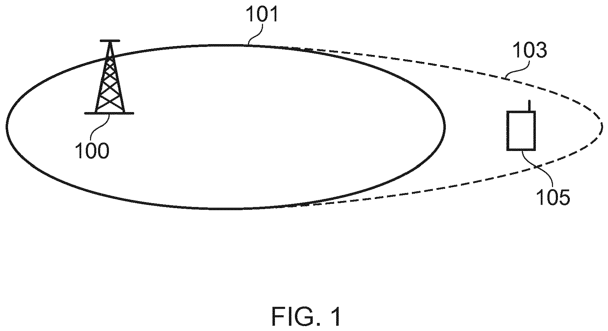

Figure 1 is a schematic representation of a portion of a wireless telecommunication network according to an example. A network node 100, such as an eNB, provides coverage for a cell 101 which consists of the existing (termed as 'normal') coverage and a targeted coverage extension region 103 which is catered for due to for example, an LC-UE such as an MTC UE 105 device located at the cell edge such as in a basement.

For those UE devices in the normal coverage region, no additional coverage enhancement (CE) is required. A device in the extended coverage region as shown Figure 1, may require coverage enhancement to account for signal attenuation as a result of the positioning of the UE for example.

For the purposes of UE paging, because of a reduction to I RX antenna for an LC-UE, the eNB needs to be able to compensate for the loss in DL coverage for paging messages (e.g. via power boosting, smaller paging message etc.). A mechanism similar to storing the UE capability on a mobility management entity (MME) can be used to store the LC-UE capability in a separate container so that when the MME is paging a legacy LC-UE, it provides the container to the eNB.

However, in order to further reduce the cost of LC-UEs the device RF bandwidth can be limited to 1.4 MHz. That is, the UE is constrained to use only 6 PRBs (for control and data) in the downlink and uplink. The same mechanism similar to legacy devices can be used to provide an LC-UE indication to the eNB. Another main feature is coverage enhancement to compensate for further coverage loss (e.g. UE is in the basement etc.) of up to 15 dB. If the UE is stationary, the same mechanism based on storing the UE capability can be used. On the other hand, if the UE is mobile in idle and connected mode, a new mechanism needs to be introduced to inform the network.

Repetition is the main mechanism to provide coverage enhancement to LC-UE devices. However, the repetition required for such aggressive coverage enhancement (100s of repetitions) has significant impact on spectral efficiency. Hence in 3GPP, multiple repetition level are introduced such that devices at different coverage levels can use different numbers of repetitions rather than a single repetition level aiming at the worst case coverage (which may require 100s of repetitions). However, in an existing system, broadcast messages such as paging are always aimed at the worst coverage. It is proposed that even for paging messages, different repetition levels are used. However, concerns are raised since this requires the device to signal the network every time it changes repetition level. This may be acceptable for a stationary device but it should be appreciated that LC-UE devices are not only for stationary machines but also for machines that may have moderate mobility. Accordingly it is desirable to be able to improve paging spectral efficiency without excessive signaling overhead.

That is, existing LC-UE idle mode paging is based on the UE capability storing mechanism where the MME receives an indication from an eNB that it is an LC-UE with certain capabilities, and whenever the MME pages the LC- UE, it provides this in the SI paging message so that the eNB knows that it is paging such an LC- UE. This may be suitable if the paging radio information does not change. However, it is not suitable if the paging radio information (e.g. due to mobility) keeps changing. An example of this is where the UE needs to be in a coverage enhanced mode to account for, for example, high signal attenuation, and the amount of repetition changes for example.

According to an example, there is provided a method, in a wireless telecommunication network, comprising receiving data from a low cost/complexity (LC) user equipment (UE) or a network node, wherein the data represents an indication (or is an indicator) of a change in LC-UE coverage enhanced mode level and/or a repetition level for idle mode paging for the LC-UE. Signalling can be provided or a message can be transmitted to the LC UE representing an instruction prohibiting the LC-UE from reporting a repetition level and configuring a repetition level for the LC-UE, and a subsequent paging message can be transmitted to the LC-UE at the configured repetition level. The number of repetitions in the configured repetition level can be predefined in the specifications or broadcast in the SIBs. For example, multiple repetition levels can be provided and a UE changing to require communication in a coverage enhanced mode can be configured to utilise a higher repetition level, such as the next level up from any repetition level in use before the change for example.

That is, signaling or a message is introduced to allow the network to prohibit the UE from reporting its repetition level in idle mode and provide a suitable repetition level for the UE to monitor for the paging message. Whilst it is recognized that knowing the UE repetition level for paging is beneficial in terms of spectral efficiency, this has to balance with the amount of signaling required for the UE to report its repetition level. That is the overall transmission (paging repetition and signaling) should be minimized over time. This therefore provides a mechanism for the network to manage this balance.

It should be appreciated that merely prohibiting the UE from reporting may not be sufficient since the network would still need to know a suitable repetition level to page the UE. Hence a suitable repetition level is also provided in this said indicator.

In an embodiment, when the MME detects that the UE is updating too often (e.g. several times per minute) on coverage enhanced mode and the repetition level, it can inform it not to provide that information for a period of time (such as 1hr for example, or more/less as desired) and inform the UE to use the highest or worst case repetition level or configured repetition level for the duration. The MME will assume this repetition level for this period of time for the UE. That is the said suitable repetition level of the said indicator, is the highest repetition level or the configured repetition level.

One additional embodiment is that the MME provides a prohibit timer to the UE for reporting any reduction in repetition level. Within this time the UE is prohibited from reporting on the change of repetition level. This recognizes that the UE would still receive paging messages using a higher repetition level and so prohibiting the UE from reporting reduction would avoid signaling overhead.

The repetition level can be determined by the network, for example based on the quality of the uplink signal such as preamble or measurement reports from the UE. The LC-UE can be prohibited or otherwise constrained from reporting a change in repetition level for a predefined period of time. The LC-UE can be prohibited from reporting an improvement in the repetition level. For example, reporting a reduction in repetition level can be prohibited. The LC-UE can be prohibited from reporting a repetition level on the basis of a threshold of the LC-UE radio condition or a change of radio condition, for example the LC-UE may only report its repetition level if the radio condition improves by more than 3 dB from the last reporting.

The following further embodiments provide methods for dynamic changing of paging radio information (e.g. whether the UE is in coverage enhanced mode and what level of repetitions is required for the paging) prior to idle mode paging.

Once the UE access stratum detects that there is a change in coverage enhanced mode (i.e. changes in coverage enhanced mode, repetition level change), it informs the upper layer to trigger a RRC Connection establishment so that the information can be provided to the network. The signaling can be provided in one of the NAS messages (e.g. tracking area update request, Service Request or Attach) or as part of the RRC messages (e.g. RRC Connection Request, UE assistance information etc.)

### Using NAS signaling

One embodiment is that the UE provides the coverage enhanced mode and/or the repetition level as part of the signaling in a network access stratum (NAS) message. Upon receiving the message, the MME stores the signaling related to coverage enhanced mode and/or repetition level for use when it needs to perform idle mode paging.

Whenever there is a change in coverage enhanced mode and/or the repetition level, the MME replaces the previous information on the coverage enhanced mode and/or the repetition level with the new one (if attach request is used to send the signaling, the MME will release all the stored information of the UE and apply the new ones).

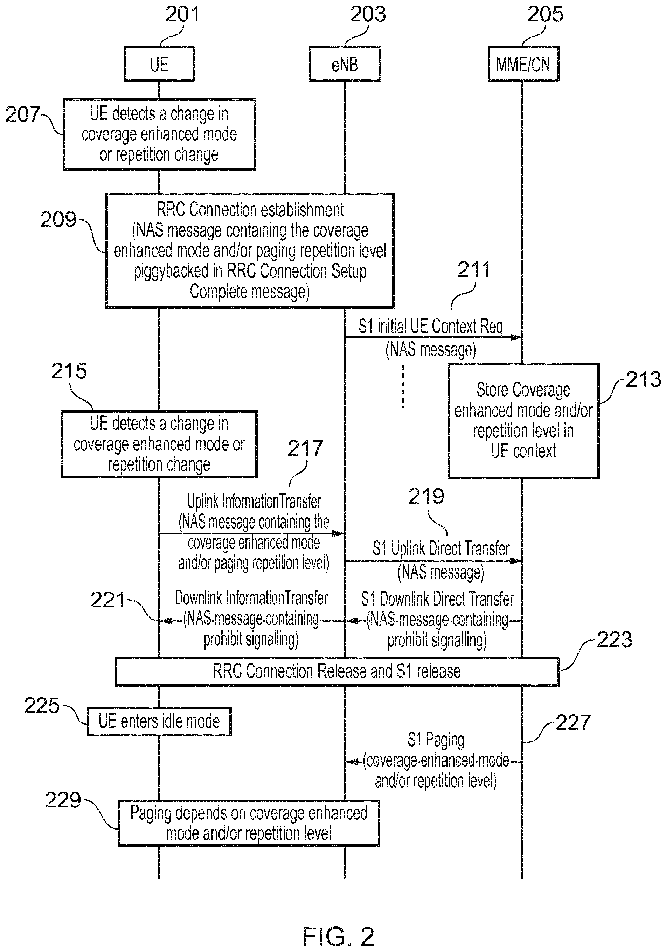

Figure 2 is schematic representation of signaling for a NAS signaling approach according to an example. At block 207 UE 201 detects a change in CE mode or repetition level (e.g. using received signal power such as a Reference Signal Received Power (RSRP) measurement for example or received signal quality measurements using a Reference Signal Received Quality (RSRQ) measurement, or using RSSI - Received Signal Strength Indicator, and so on).

An RRC connection is established in block 209 with eNB 203 in which a NAS message containing the CE mode and/or paging repetition level is piggybacked with an RRC connection setup complete message for example. At 21 I, an SI initial UE context request (NAS message) is sent from eNB 203 to the core network 205, such as an MME. In block 213 CE mode and/or a repetition level is stored at the CN 205 with or for a UE context.

At block 215, UE 201 detects a change in CE mode or a repetition level, using for example the measurements noted above. A NAS message 217 from UE 201 is sent to eNB 203 indicating uplink transfer information which contains the CE mode and/or paging repetition level. There is an SI uplink direct transfer 219 (NAS message). An SI downlink direct transfer (NAS message containing prohibit signal/message/indicator) is then provided at 221. Subsequently, at block 223 there is an RRC connection release and SI release. At block 225 the UE 201 enters an idle mode of operation. SI paging (227) (CE mode and/or repetition level) is performed. Paging depends on CE mode and/or repetition level (229).

### Using RRC signaling

One embodiment is that the UE provides the coverage enhanced mode and/or the repetition level as part of the signaling in a RRC message. Upon receiving the message, the eNB prepares a new container or reuses the existing paging radio information container to include this information and sends it to the MME via a SI message (e.g. UE capability transfer or other SI message).

Whenever there is a change in coverage enhanced mode and/or the repetition level, the eNB prepares the new container or the paging radio information container to include the changed information and sends it to the MME. The MME replaces the previous container with the new container from the eNB.

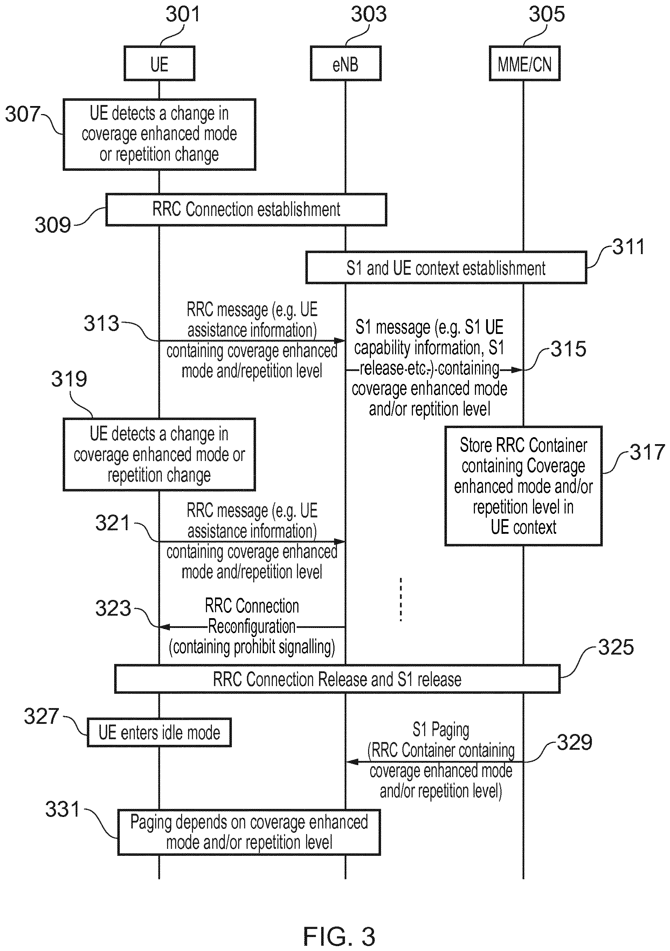

Figure 3 is schematic representation of signaling for an RRC signaling approach according to an example. At block 307 UE 301 detects a change in CE mode or repetition level, using for example the measurements noted above. An RRC connection is established in block 309 with eNB 303. At 311, an SI initial UE context request (NAS message) is sent from eNB 303 to the core network 305, such as an MME. At 313 an RRC message is sent from UE 301 to eNB 303 containing CE mode and/or repetition level information. For example, message 313 can be a message providing UE assistance information.

An SI message is sent between eNB 303 and the CN 305 in 315 containing CE mode and/or repetition level information. In block 317 the CE mode and/or repetition level information is stored in a UE context container at the CN 305.

At block 319, UE 201 detects a change in CE mode or a repetition level. An RRC message 321 from UE 301 is sent to eNB 303 which contains the CE mode and/or paging repetition level.

An RRC connection message 323 containing prohibit signal/message/indicator is provided at 323 from eNB 303 to UE 301. Subsequently, at block 325 there is an RRC connection release and SI release. At block 327 the UE 301 enters an idle mode of operation. S I paging (329) (RRC container containing CE mode and/or repetition level) is performed. Paging depends on CE mode and/or repetition level (331).

### eNB derives/determines whether the UE should be in coverage enhanced mode and/or determines the required repetition level

One further embodiment is that the eNB can determine whether the UE should be in coverage enhanced mode and/or determines the required repetition level itself when the UE enters connected mode after detecting that its coverage has changed and required either no coverage enhanced mode or coverage enhanced mode, or it requires different repetition level.

No signaling is required from the UE. The eNB determines whether the UE requires coverage enhanced mode and the associated repetition level either via initial establishment (preamble used, repetition level used for RAR etc.) and subsequent measurements in RRC connected mode (e.g. CSI, RRM measurements etc.).

Whenever there is a change in coverage enhanced mode and/or the repetition level or before the UE enters idle mode, the eNB prepares the new container or the paging radio information container to include the changed or last information on the coverage enhanced mode and/or the repetition level and sends it to the MME. The MME replaces the previous container with the new container from the eNB.

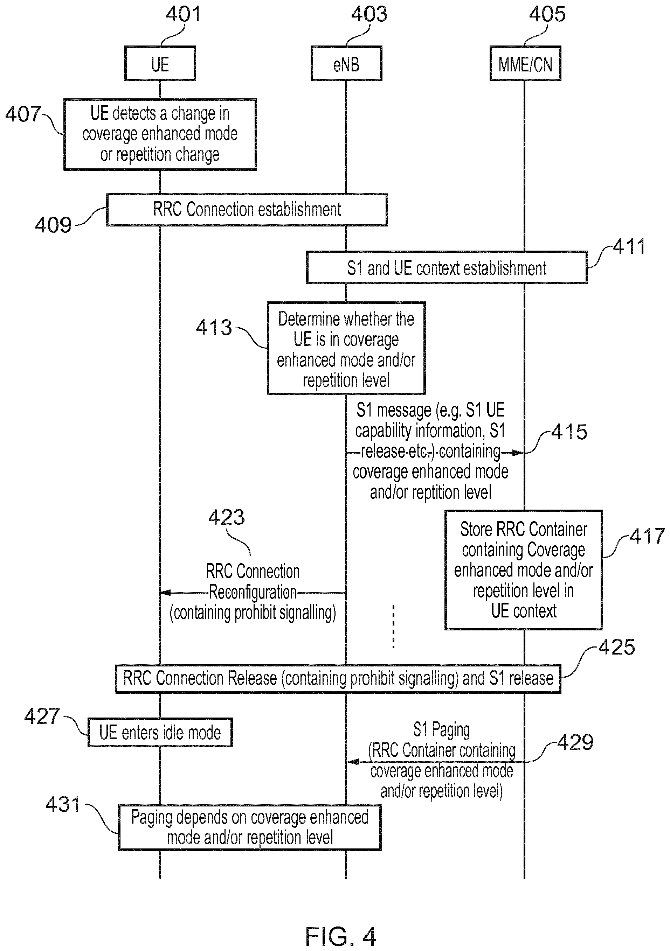

Figure 4 is schematic representation of signaling for an RRC signaling approach according to an example. At block 407 UE 401 detects a change in CE mode or repetition level, using for example the measurements noted above. An RRC connection is established in block 409 with eNB 403. At 411, an SI initial UE context request is sent from eNB 403 to the core network 405, such as an MME. At block 413 the eNB 403 determines whether the UE 401 is CE mode and determines the repetition level.

An S I message is sent between eNB 403 and the CN 405 in 415 containing CE mode and/or repetition level information. In block 417 the CE mode and/or repetition level information is stored in a UE context container at the CN 405.

An RRC connection message containing prohibit signal/message/indicator is provided at 423 from eNB 403 to UE 401. At block 425 there is an RRC connection release and S I release. At block 427 the UE 401 enters an idle mode of operation. S I paging (429) (RRC container containing CE mode and/or repetition level) is performed. Paging depends on CE mode and/or repetition level (431).

Accordingly, there is provided a method to allow more dynamic change than is currently permitted using a UE capability signaling approach. Furthermore, it provides a further mechanism to prevent excessive signaling on the change.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a wireless telecommunication network, comprising:
receiving data from a low cost/complexity, LC, user equipment, UE, (105; 201; 301; 401) or a network node (100; 203; 303; 403), the data representing an indication containing LC-UE coverage enhanced mode and/or a repetition level for idle mode paging for the LC-UE (105; 201; 301; 401); and
transmitting a message to the LC UE (105; 201; 301; 401) representing an instruction prohibiting the LC-UE (105; 201; 301; 401) from reporting a repetition level and providing a configured repetition level for the LC-UE (105; 201; 301; 401).

2. A method as claimed in claim 1, further comprising transmitting any future paging message to the LC-UE (105; 201; 301; 401) at the configured repetition level.

3. A method as claimed in claim 1 or 2, wherein the indication is provided in an LC-UE (105; 201; 301; 401) network access stratum, NAS, message or resource control, RRC, message.

4. A method as claimed in claim 1 or 2, wherein the repetition level is determined by the network.

5. A method as claimed in any preceding claim, further comprising prohibiting the LC-UE (105; 201; 301; 401) from reporting a change in repetition level for a predefined period of time.

6. A method as claimed in claim 5, further comprising prohibiting the LC-UE (105; 201; 301; 401) from reporting an improvement in the repetition level.

7. A method as claimed in any preceding claim, further comprising prohibiting the LC-UE (105; 201; 301; 401) from reporting a repetition level on the basis of a threshold of the LC-UE (105; 201; 301; 401) radio condition or a change of radio condition.

8. A method as claimed in claim 7, wherein the LC-UE (105; 201; 301; 401) is prohibited from reporting a repetition level in the event that the signal-to-noise ratio or a change in the signal-to-noise ratio for the LC-UE (105; 201; 301; 401) is below a predetermined threshold value.

9. A node (100; 203; 303; 403), in a wireless telecommunication network, the node operable to:
transmit data representing an indication containing coverage enhanced mode and/or a repetition level for idle mode paging for a low cost/complexity, LC, user equipment, UE, (105; 201; 301; 401); and
transmit a message to the LC-UE (105; 201; 301; 401) representing an instruction prohibiting the LC-UE (105; 201; 301; 401) from reporting a repetition level and provide a configured repetition level for the LC-UE (105; 201; 301; 401).

10. A node (100; 203; 303; 403) as claimed in claim 9, wherein the node (100; 203; 303; 403) is operable to transmit any future paging message to the LC-UE (105; 201; 301; 401) at the configured repetition level.

11. A node (100; 203; 303; 403) as claimed in claim 9 or 10, wherein the message representing an instruction is transmitted to the LC-UE (105; 201; 301; 401) in response to an indication from a mobility management entity (205; 305; 405) of the network relating to the frequency of repetition level updates provided by the LC-UE (105; 201; 301; 401).

12. A node (100; 203; 303; 403) as claimed in any of claims 9 to 11, wherein the node is operable to determine whether the LC-UE (105; 201; 301; 401) should enter a coverage enhanced mode.

13. A node (100; 203; 303; 403) as claimed in any of claims 9 to 12, wherein the node is operable to determine a required repetition level for the LC-UE (105; 201; 301; 401).

14. A node (100; 203; 303; 403) as claimed in claim 12 or 13, wherein the node is operable to make a determination when the LC-UE (105; 201; 301; 401) enters a connected mode of operation with the node.

15. A node (100; 203; 303; 403) as claimed in claim 14, wherein the node is operable to determine whether the LC-UE (105; 201; 301; 401) should enter a coverage enhanced mode via initial establishment with the LC-UE (105; 201; 301; 401) using a preamble or repetition level used for random access response with the LC-UE (105; 201; 301; 401).

## Patentansprüche

1. Verfahren, in einem drahtlosen Telekommunikationsnetzwerk, umfassend:
Erhalten von Daten von einem Niedrigkosten-/Komplexität-, LC, Teilnehmergerät, UE, (105; 201; 301, 401) oder einem Netzwerkknoten (100; 203; 303; 403), wobei die Daten eine Anzeige darstellen, die den erweiterten LC-UE Abdeckungsmodus und/oder einen Wiederholungsgrad für das Ruhemodus-Paging für das LC-UE (105; 201; 301; 401) enthält; und
Übertragen einer Nachricht auf das LC-UE (105; 201; 301; 401), die eine Anweisung darstellt, die dem LC-UE (105; 201; 301; 401) verbietet, einen Wiederholungsgrad zu melden und einen konfigurierten Wiederholungsgrad für das LC-UE (105; 201; 301; 401) bereitzustellen.

2. Verfahren nach Anspruch 1, weiterhin umfassend das Übertragen von jeglichen künftigen Nachrichten auf das LC-UE (105; 201; 301; 401) bei dem konfigurierten Wiederholungsgrad.

3. Verfahren nach Anspruch 1 oder 2, wobei die Anzeige in einer LC-UE (105; 201; 301; 401) NAS-Nachricht (Network Access Stratum) oder RRC-Nachricht (Resource Control) bereitgestellt wird.

4. Verfahren nach Anspruch 1 oder 2, wobei der Wiederholungsgrad durch das Netzwerk bestimmt wird.

5. Verfahren nach einem beliebigen der vorhergehenden Ansprüche, weiterhin umfassend, dem LC-UE (105; 201; 301; 401) zu verbieten, eine Änderung im Wiederholungsgrad für einen vordefinierten Zeitraum zu melden.

6. Verfahren nach Anspruch 5, weiterhin umfassend, dem LC-UE (105; 201; 301; 401) zu verbieten, eine Verbesserung im Wiederholungsgrad zu melden.

7. Verfahren nach einem beliebigen der vorhergehenden Ansprüche, weiterhin umfassend, dem LC-UE (105; 201; 301; 401) zu verbieten, einen Wiederholungsgrad auf Grundlage eines Schwellenwerts der LC-UE (105; 201; 301; 401) Funkbedingung oder eine Änderung der Funkbedingung zu melden.

8. Verfahren nach Anspruch 7, wobei dem LC-UE (105; 201; 301; 401) verboten wird, einen Wiederholungsgrad zu melden, wenn das Rauschverhältnis für das LC-UE (105; 201; 301; 401) unter einem vorbestimmten Schwellenwert liegt.

9. Knoten (100; 203; 303; 403) in einem drahtlosen Telekommunikationsnetzwerk, wobei der Knoten betreibbar ist zum:
Übertragen von Daten, die eine Anzeige darstellen, die den erweiterten Abdeckungsmodus und/oder einen Wiederholungsgrad für das Ruhemodus-Paging für ein Niedrigkosten-/Komplexität-, LC, Teilnehmergerät, UE, (105; 201; 301; 401) enthält; und Übertragen einer Nachricht auf das LC-UE (105; 201; 301; 401), die eine Anweisung darstellt, die dem LC-UE (105; 201; 301; 401) verbietet, einen Wiederholungsgrad zu melden und einen konfigurierten Wiederholungsgrad für das LC-UE (105; 201; 301; 401) bereitzustellen.

10. Knoten (100; 203; 303; 403) nach Anspruch 9, wobei der Knoten (100; 203; 303; 403) betreibbar ist zum Übertragen einer jeglichen künftigen Paging-Nachricht an das LC-UE (105; 201; 301; 401) bei dem konfigurierten Wiederholungsgrad.

11. Knoten (100; 203; 303; 403) nach Anspruch 9 oder 10, wobei die Nachricht, die eine Anweisung darstellt, auf das LC-UE (105; 201; 301; 401) übertragen wird als Antwort auf eine Anzeige von einer Mobilitätsverwaltungsentität (205; 305; 405) des Netzwerks, die sich auf die Frequenz der Wiederholungsgradaktualisierungen bezieht, die vom LC-UE (105; 201; 301; 401) bereitgestellt wird.

12. Knoten (100; 203; 303; 403) nach einem beliebigen der Ansprüche 9 bis 11, wobei der Knoten betreibbar ist zum Bestimmen, ob das LC-UE (105; 201; 301; 401) in einen erweiterten Abdeckungsmodus übergehen sollte.

13. Knoten (100; 203; 303; 403) nach einem beliebigen der Ansprüche 9 bis 12, wobei der Knoten betreibbar ist zum Bestimmen eines erforderlichen Wiederholungsgrads für das LC-UE (105; 201; 301; 401).

14. Knoten (100; 203; 303; 403) nach Anspruch 12 oder 13, wobei der Knoten betreibbar ist zum Durchführen einer Bestimmung, wenn das LC-UE (105; 201; 301; 401) in einen verbundenen Betriebsmodus mit dem Knoten eingeht.

15. Knoten (100; 203; 303; 403) nach Anspruch 14, wobei der Knoten betreibbar ist zum Bestimmen, ob das LC-UE (105; 201; 301; 401) in einen erweiterten Abdeckungsmodus übergehen sollte über einen Erstaufbau, wobei das LC-UE (105; 201; 301; 401) eine Präambel oder einen Wiederholungsgrad verwendet, der für die Direktzugriffsantwort für das LC-UE (105; 201; 301; 401) verwendet wird.

## Revendications

1. Procédé, dans un réseau de télécommunication sans fil, comprenant les étapes suivantes :
recevoir des données en provenance d'un équipement utilisateur, UE, à faible coût/complexité, LC, (105 ; 201 ; 301 ; 401) ou d'un noeud de réseau (100 ; 203 ; 303 ; 403), les données représentant une indication contenant un mode amélioré de couverture LC-UE et/ou un niveau de répétition pour une radiomessagerie en mode repos pour le LC-UE (105; 201 ; 301 ; 401) ; et
transmettre un message au LC UE (105; 201 ; 301 ; 401) représentant une instruction interdisant au LC-UE (105 ; 201 ; 301 ; 401) de rapporter un niveau de répétition et fournir un niveau de répétition configuré pour le LC-UE (105 ; 201 ; 301 ; 401).

2. Procédé selon la revendication 1, comprenant en outre la transmission de tout message de radiomessagerie futur au LC-UE (105; 201 ; 301 ; 401) au niveau de répétition configuré.

3. Procédé selon la revendication 1 ou 2, dans lequel l'indication est fournie dans un message de strate d'accès au réseau, NAS, ou un message de contrôle de ressource, RRC, de LC-UE (105 ; 201 ; 301 ; 401).

4. Procédé selon la revendication 1 ou 2, dans lequel le niveau de répétition est déterminé par le réseau.

5. Procédé selon l'une quelconque des revendications précédentes, comprenant en outre l'interdiction du LC-UE (105 ; 201 ; 301 ; 401) de rapporter un changement de niveau de répétition pendant une période de temps prédéfinie.

6. Procédé selon la revendication 5, comprenant en outre l'interdiction du LC-UE (105 ; 201 ; 301 ; 401) de rapporter une amélioration du niveau de répétition.

7. Procédé selon l'une quelconque des revendications précédentes, comprenant en outre l'interdiction du LC-UE (105 ; 201 ; 301 ; 401) de rapporter un niveau de répétition sur la base d'un seuil de la condition radio LC-UE (105; 201 ; 301 ; 401) ou d'un changement de condition radio.

8. Procédé selon la revendication 7, dans lequel le LC-UE (105 ; 201 ; 301 ; 401) est interdit de rapporter un niveau de répétition dans le cas où le rapport signal sur bruit ou un changement du rapport signal sur bruit pour le LC-UE (105 ; 201 ; 301 ; 401) est inférieur à une valeur de seuil prédéterminée.

9. Noeud (100 ; 203 ; 303 ; 403), dans un réseau de télécommunication sans fil, le noeud exploitable pour :
transmettre des données représentant une indication contenant un mode amélioré de couverture et/ou un niveau de répétition pour une radiomessagerie en mode repos pour un équipement utilisateur, UE, à faible coût/complexité, LC, (105 ; 201 ; 301 ; 401) ; et
transmettre un message au LC UE (105 ; 201 ; 301 ; 401) représentant une instruction interdisant au LC-UE (105 ; 201 ; 301 ; 401) de rapporter un niveau de répétition et fournir un niveau de répétition configuré pour le LC-UE (105 ; 201 ; 301 ; 401).

10. Noeud (100 ; 203 ; 303 ; 403) selon la revendication 9, le noeud (100 ; 203 ; 303 ; 403) étant exploitable pour transmettre tout message de radiomessagerie futur au LC-UE (105 ; 201 ; 301 ; 401) au niveau de répétition configuré.

11. Noeud (100; 203; 303; 403) selon la revendication 9 ou 10, dans lequel le message représentant une instruction est transmis au LC-UE (105 ; 201 ; 301 ; 401) en réponse à une indication en provenance d'une entité de gestion de mobilité (205 ; 305 ; 405) du réseau relative à la fréquence de mises à jour de niveau de répétition fournies par le LC-UE (105 ; 201 ; 301 ; 401).

12. Noeud (100 ; 203 ; 303 ; 403) selon l'une quelconque des revendications 9 à 11, le noeud étant exploitable pour déterminer si le LC-UE (105 ; 201 ; 301 ; 401) devrait entrer dans un mode amélioré de couverture.

13. Noeud (100 ; 203 ; 303 ; 403) selon l'une quelconque des revendications 9 à 12, le noeud étant exploitable pour déterminer un niveau de répétition requis pour le LC-UE (105; 201 ; 301 ; 4001).

14. Noeud (100 ; 203 ; 303 ; 403) selon la revendication 12 ou 13, le noeud étant exploitable pour effectuer une détermination lorsque le LC-UE (105 ; 201 ; 301 ; 401) entre dans un mode de fonctionnement connecté avec le noeud.

15. Noeud (100 ; 203 ; 303 ; 403) selon la revendication 14, le noeud étant exploitable pour déterminer si le LC-UE (105 ; 201 ; 301 ; 401) devrait entrer dans un mode amélioré de couverture via un établissement initial avec le LC-UE (105; 201 ; 301 ; 401) en utilisant un préambule ou un niveau de répétition utilisé pour une réponse d'accès aléatoire avec le LC-UE (105 ; 201 ; 301 ; 401).
